(19) Europäisches Patentamt
European Patent Office
Office européen des brevets

(11) **EP 1 351 843 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(51) Int Cl.:
*B60T 8/00* *(2006.01)*     *B65D 5/04* *(2006.01)*
*B62D 6/04* *(2006.01)*     *B62D 7/15* *(2006.01)*

(21) Anmeldenummer: **01988677.9**

(22) Anmeldetag: **20.10.2001**

(86) Internationale Anmeldenummer:
**PCT/DE2001/004029**

(87) Internationale Veröffentlichungsnummer:
**WO 2002/034599 (02.05.2002 Gazette 2002/18)**

(54) **EINRICHTUNG UND VERFAHREN ZUM BETRIEB EINES FAHRZEUGS**

DEVICE AND METHOD FOR OPERATING A MOTOR VEHICLE

DISPOSITIF ET PROCEDE DE FONCTIONNEMENT D'UN VEHICULE

(84) Benannte Vertragsstaaten:
**AT BE CH CY DE DK ES FI FR GB GR IE IT LI LU MC NL PT SE TR**

(30) Priorität: **28.10.2000 DE 10053604**

(43) Veröffentlichungstag der Anmeldung:
**15.10.2003 Patentblatt 2003/42**

(73) Patentinhaber: **ROBERT BOSCH GMBH**
**70442 Stuttgart (DE)**

(72) Erfinder:
• **HACKL, Matthias**
**71665 Vaihingen (DE)**
• **KRAEMER, Wolfgang**
**85051 Ingolstadt (DE)**
• **MUENZ, Rainer**
**71254 Ditzingen (DE)**

(56) Entgegenhaltungen:
**EP-A- 0 487 967**     **US-A- 4 998 593**
**US-A- 5 482 133**

**Beschreibung**

Die Erfindung betrifft eine Einrichtung und ein Verfahren zum Betrieb eines Fahrzeugs mit einem Fahrzeugregler zur individuellen Einstellung von Bremskräften der Räder zumindest einer Achse des Fahrzeugs und einem Giermomentenkompensator zur zumindest teilweisen Kompensation eines Giermomentes des Fahrzeuges infolge unterschiedlicher Bremskräfte einzelner Räder der zumindest einen Achse durch einen Eingriff in eine Lenkung des Fahrzeugs.

Bremsanlagen wie etwa hydraulische, elektrohydraulische, pneumatische, elektropneumatische oder elektromechanische Bremsanlagen sind heute vermehrt elektrisch steuerbar. Die elektrische Steuerung erlaubt einen vom Fahrerbremswunsch, d.h. von der Bremspedalbetätigung durch den Fahrer unabhängigen Druckaufbau in den Radbremsen. Derartige elektrische Steuerungen von Bremsanlagen dienen beispielsweise der Durchführung einer Antiblokkierregelung (ABS, d.h. Antiblockiersystem) oder einer Fahrdynamikregelung (FDR bzw. ESP, d.h. Electronic Stability Program).

Ein Antiblockiersystem (ABS) hat den Zweck, ein Schleudern eines Fahrzeugs infolge eines Blockierens seiner Räder während einer Bremsung insbesondere auf einem glatten Untergrund zu verhindern. Zu diesem Zweck wird bei einer dauerhaften Betätigung des Bremspedals durch den Fahrer über Sensoren festgestellt, ob die einzelnen Räder blockieren und immer dann, wenn dies der Fall ist, der Bremsdruck auf die jeweils zugehörige Radbremse reduziert. Typischerweise (aber nicht zwingend) werden bei einem solchen Antiblockiersystem die Vorderräder des Fahrzeugs getrennt und damit unterschiedlich angesteuert, während die Hinterräder gemeinsam angesteuert werden.

Eine Fahrdynamikregelung (FDR bzw. ESP) dient der Kontrolle von Lenk-, Brems- und Gaspedalvorgaben durch den Fahrer um ein Schleudern des Fahrzeugs infolge von falschen Vorgaben zu verhindern. Dabei werden falsche Vorgaben durch gezielte Bremseingriffe an den einzelnen Rädern aufgefangen.

Ähnlich wie Bremsanlangen durch elektrische Steuerungen können auch Lenkanlagen durch motorgetriebene Lenksystem gesteuert werden. Dabei kann beispielsweise mittels eines Stellgliedes zum überlagerten Lenkeingriff die Lenkradleistung, die vom Fahrer aufgebracht wird, mit der Leistung einer Leistungsquelle, etwa eines Elektromotors überlagert werden. Einerseits kann so eine die Lenkradleistung des Fahrers unterstützende Wirkung erzielt werden. Andererseits können die Lenksysteme des Fahrzeugs mit Lenksignalen beaufschlagt werden, die die Fahrsicherheit und/oder den Fahrkomfort erhöhen. Ein solches motorbetriebenes Lenksystem wird beispielsweise in der DE 40 31 316 A1 beschrieben.

Eine Kombination aus einer Steuerung einer Bremsanlage und einer Lenkanlage eines Fahrzeugs wird in der EP 487 967 B1 (Fahrzeug mit einem Antiblockierregler) beschrieben. Auf diese Patentschrift wird vollinhaltlich Bezug genommen. Kurz gesagt, wird in der EP 487 967 B1 eine Giermomentkompensation (GMK) für ein mit einem Antiblokkiersystem (ABS) ausgerüstetes Fahrzeug beschrieben. Die Giermomentkompensation kompensiert das beim Bremsen auf inhomogener Fahrbahn (beispielsweise bei $\mu$-Split) infolge unterschiedlicher Bremskräfte an dem oder den linken und rechten Rad bzw. Rädern entstehende Giermoment des Fahrzeugs durch Bestimmung eines Korrekturlenkwinkels.

Dokument US 5 482 133 A offenbart ein Verfahren bzw. eine Einrichtung zum Betrieb eines Fahrzeuges gemäß dem oberbegriff der Ansprüche 1 bzw. 9.

Es ist die Aufgabe der Erfindung, ein verbessertes Verfahren und eine verbesserte Vorrichtung zur Steuerung einer Bremsanlage und einer Lenkanlage eines Fahrzeugs, sowie ein Fahrzeug mit einer entsprechenden Vorrichtung zur Verfügung zu stellen.

Die Aufgabe wird durch ein Verfahren gemäß Anspruch 1 sowie eine Einrichtung gemäß Anspruch 9 gelöst. Dabei erfolg zum Betrieb eines Fahrzeugs mit einem Fahrzeugregler zur individuellen Einstellung von Bremskräften der Räder zumindest einer Achse des Fahrzeugs und einem Giermomentenkompensator zur zumindest teilweisen Kompensation eines Giermomentes des Fahrzeuges infolge unterschiedlicher Bremskräfte einzelner Räder der zumindest einen Achse durch einen Eingriff in eine Lenkung des Fahrzeugs der Eingriff des Giermomentenkompensators in die Lenkung nicht oder nur verringert, während mittels des Fahrzeugreglers Bremskräfte einstellt werden.

Außerdem erfolgt der Eingriff in eine Lenkung des Fahrzeugs mittels eines in Abhängigkeit von Bremskräften einzelner Räder ermittelten Kompensations-Lenkwinkel.

Ferner werden für die Vorderräder und für die Hinterräder jeweils getrennte Teil-Kompensations-Lenkwinkel bestimmt, wobei der Kompensations-Lenkwinkel in Abhängigkeit von den Teil-Kompensations-Lenkwinkeln bestimmt wird.

D.h. insbesondere, daß der Eingriff des Giermomentenkompensators in die Lenkung nicht erfolgt, während der Fahrzeugregler aktiv ist.

Der Fahrzeugregler ist insbesondere Teil einer Fahrdynamikregelung (FDR bzw. ESP), insbesondere wie sie z. B. In dem Artikel "FDR - die Fahrdynamikregelung von Bosch", von A. van Zanten, R. Erhardt und G. Pfaff, ATZ Automobiltechnische Zeitschrift 96 (1994) 11 Seiten 674 bis 689 und dem SAE-Paper 973184 "Vehicle Dynamics Controler for Commercial Vehicles" von F. Hecker, S. Hummel, O. Jundt, K.-D. Leimbach, I. Faye, H. Schramm,oftenbart ist. Der Fahrzeugregler ist dabei vorteilhafterweise zur Einstellung der Bremskräfte in Abhängigkeit von der Giergeschwindigkeit des Fahrzeugs und einer Soll-Giergeschwindigkeit des Fahrzeugs, insbesondere in Abhängigkeit von der Differenz der Giergeschwindigkeit des Fahrzeugs und der Soll-Giergeschwindigkeit des Fahrzeugs, ausgestaltet. Dabei erfolgt die Einstellung der Bremskräfte vorteilhafterweise durch Berechnung von Sollschlupfwerten für die Räder, die vorteilhafterweise Eingangsgrößen in unterlagerte Regelkreise sind.

Eine Verringerung des Eingriffs des Giermomentenkompensators in die Lenkung erfolgt dabei vorteilhafterweise mittels zumindest eines Filters.

In weiterhin vorteilhafter Ausgestaltung der Erfindung ist die Achse die Vorder und/oder die Hinterachse.

In weiterhin vorteilhafter Ausgestaltung der Erfindung wird zur mindestens teilweisen Kompensation des Giermomentes des Fahrzeuges ein von einer Differenz von getrennt eingeregelten Bremsdrücken der Vorder- und/oder der Hinterräder abhängiger Kompensations-Lenkwinkel an einem Hinterradlenksystem eingestellt oder einem Vorderrad- oder Hinterradlenkwinkel überlagert .

Die Bremsdrücke werden dabei als vorteilhafte Ersatzgrößen für die Bremskräfte verwendet.

In weiterhin vorteilhafter Ausgestaltung der Erfindung wird der Wert des Kompensations-Lenkwinkels in einem vorgegebenen oder veränderlichen Bereich kleiner Bremsdruckdifferenzen, d. h. innerhalb einer Totzone, gleich Null und außerhalb der Totzone auf einen Wert ungleich Null gesetzt.

Die Werte für die Totzone sind vorteilhafterweise für Vorder- und Hinterachse verschieden.

In weiterhin vorteilhafter Ausgestaltung der Erfindung wird der Kompensations-Lenkwinkel durch Addition der Teil-Kompensations-Lenkwinkel bestimmt.

In weiterhin vorteilhafter Ausgestaltung der Erfindung wird zumindest ein Teil-Kompensations-Lenkwinkel nach dem Überschreiten der Totzone durch Addition des Produktes einer Konstanten und dem Ausgangswert der Totzone und des Produktes einer variablen Verstärkung und dem Ausgangswert der Totzone bestimmt.

In weiterhin vorteilhafter Ausgestaltung der Erfindung wird der Kompensations-Lenkwinkel gespeichert, wenn mittels des Fahrzeugreglers Bremskräfte einstellt werden.

In weiterhin vorteilhafter Ausgestaltung der Erfindung wird der gespeichert Kompensations-Lenkwinkel nach Beendigung der Einstellung der Bremskräfte mittels des Fahrzeugreglers auf einen aktuellen Kompensations-Lenkwinkel im wesentlichen kontinuierlich überführt.

Weitere Vorteile ergeben sich aus der folgenden Beschreibung von Ausführungsbeispielen der Erfindung mit Bezug auf die Figuren. Im einzelnen zeigen:

FIG.1    ein Blockschaltbild eines technischen Umfeldes, welches durch ein Ausführungsbeispiel der vorliegenden Erfindung verbessert wird;

FIG.2    ein Diagramm zum Blockschaltbild aus FIG.1;

FIG.3    ein Diagramm zum Blockschaltbild aus FIG.1;

FIG.4    ein Diagramm zum Blockschaltbild aus FIG.1;

FIG.5    ein Blockschaltbild eines modifizierten technischen Umfeldes, welches durch ein Ausführungsbeispiel der vorliegenden Erfindung verbessert wird;

FIG.6    ein Blockschaltbild eines Ausführungsbeispiels der vorliegenden Erfindung; und

FIG. 7    ein Diagramm zum Ausführungsbeispiel aus FIG.6.

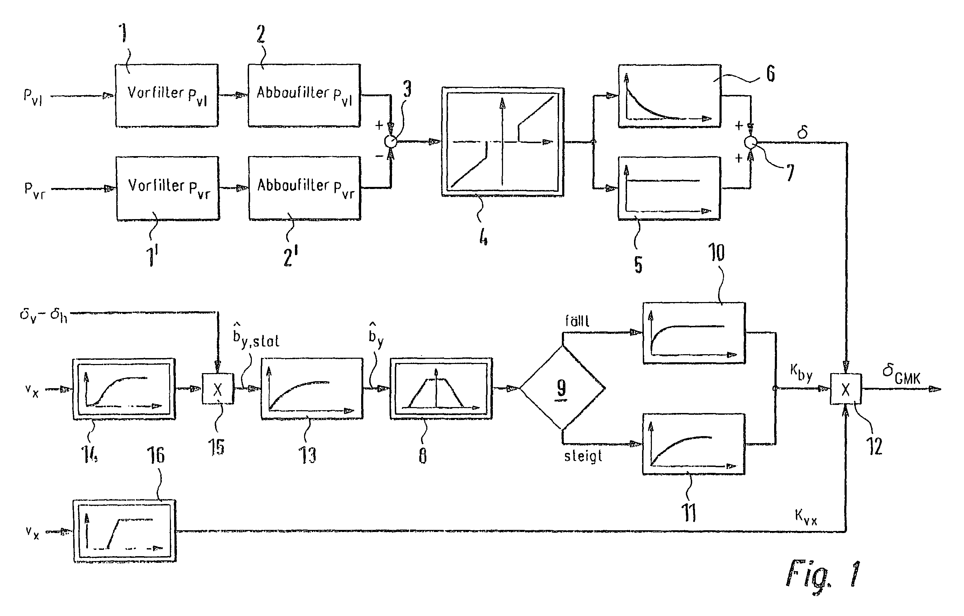

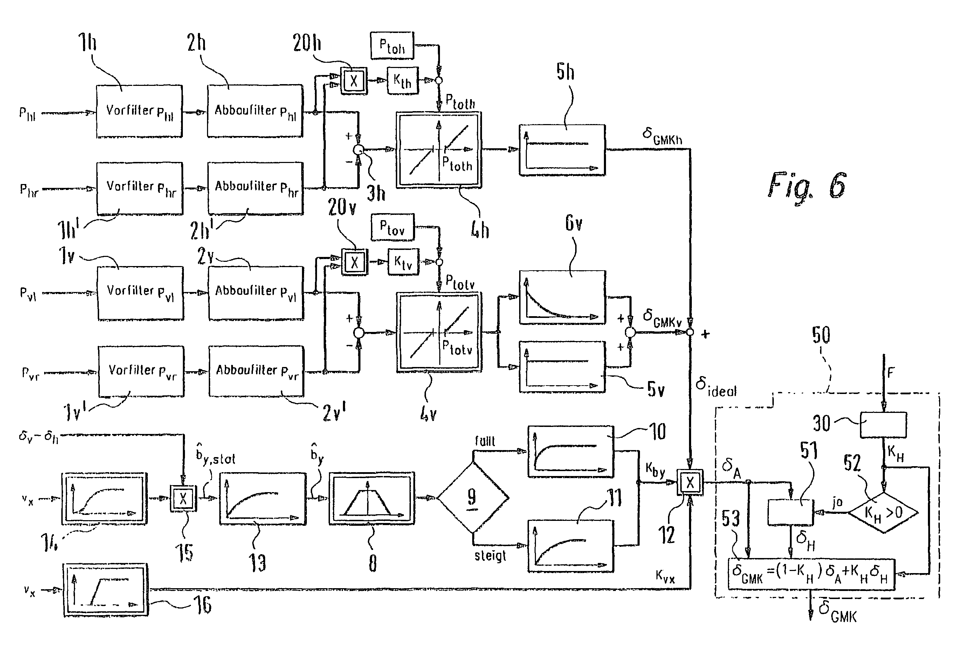

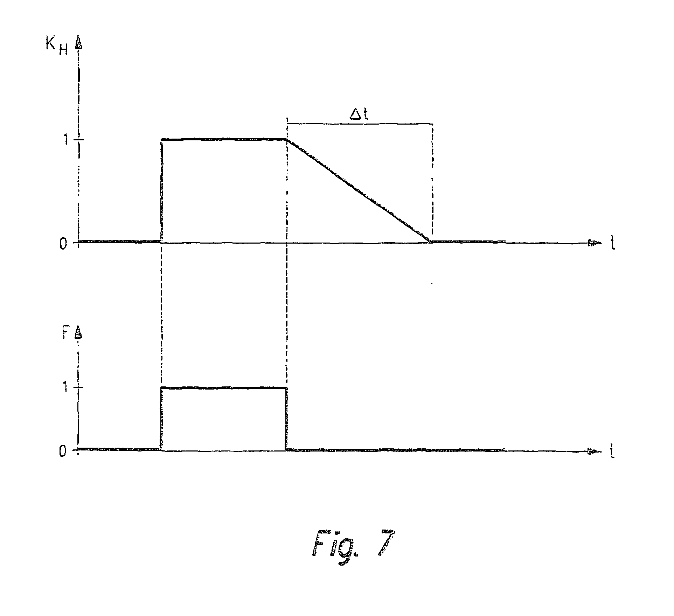

Im folgenden wird zunächst anhand von FIG. 1 bis Fig. 5 ein technisches Umfeld beispielhaft erläutert, welches durch ein Ausführungsbeispiel der vorliegenden Erfindung verbessert wird. Sodann wird anhand der FIG. 6 und FIG. 7 ein Ausführungsbeispiel der vorliegenden Erfindung beschrieben.

Im vorliegenden Beispiel für ein technisches Umfeld aus FIG. 1, wird auf die Kompensation des Bremsgiermoments durch eine Hinterachslenkung bei select-low gebremster Hinterachse eingegangen.

Die Bremsdrücke in den Vorderrädern liefern in erster Näherung ein Maß für die ausgenutzte Bremskraft, die Differenz $\Delta p$ der Drücke folglich ein Maß für das Bremsgiermoment. Der Hinterachslenkwinkel $\delta$ erzeugt ein entgegengesetztes Moment um die Fahrzeughochachse, welches bei geeigneter Auslegung das Bremsgiermoment kompensiert. Der stationäre Zusammenhang zwischen $\delta$ und $\Delta p$ wird durch den Proportionalitätsfaktor $k_p$ beschrieben.

Da während einer ABS-Bremsung die Bremsdrücke ständig moduliert werden, würde eine Hinterachslenksteuerung mit ausschließlich o.g. Proportionalität sehr unruhig reagieren. Deshalb wird eine Filterung vorgesehen, bevor die Druckdifferenz berechnet wird. Diese Differenz muß erst einmal eine signifikante Schwelle (Totzone) überwinden, bevor die Steuerung aktiv wird; auch diese Maßnahme soll Lenkunruhe bei kleinen Störungen vermeiden.

Die Filterung der gemessenen Bremsdrücke $P_{vl}$ und $p_{vr}$ erfolgt zweistufig.

Im Vorfilter 1 bzw. 1' sollen Störungen durch das Meßrauschen (Peaks, A/D-Fehler) unterdrückt werden, was durch eine variable Begrenzung der Druckänderungsrate erreicht wird. Die Anstiegsbegrenzung bleibt bei häufigem Wechsel von Druckaufbau und -abbau bei kleinen Werten, bei einer Änderung mit gleichem Vorzeichen über einen längeren Zeitraum hinweg wird sie kontinuierlich bis zu einem Maximalwert erhöht.

Die Abbaufilter 2 bzw. 2' sind speziell auf die Zusammenhänge zwischen ABS-Regelzyklen (ABS-Regalzyklen mit Pulsreihen) und Hinterradlenkung ausgerichtet. Damit der Hinterradlenkwinkel den Drucksprüngen insbesondere in den Druckabbauphasen nicht direkt folgt, wird ein Absinken der gefilterten Bremsdrücke beim ersten Druckabbau nach einer Druckanstiegsphase nur sehr langsam zugelassen. Nach Ablauf einer vorgegebenen Zeit (z. B. 100 ms) wird die Zeitkonstante des Tiefpasses umgeschaltet, so daß sich der gefilterte Wert (Ausgang von Block 2 bzw. 2') schneller an die Ausgangsgröße des Vorfilters 1 (1') annähert.

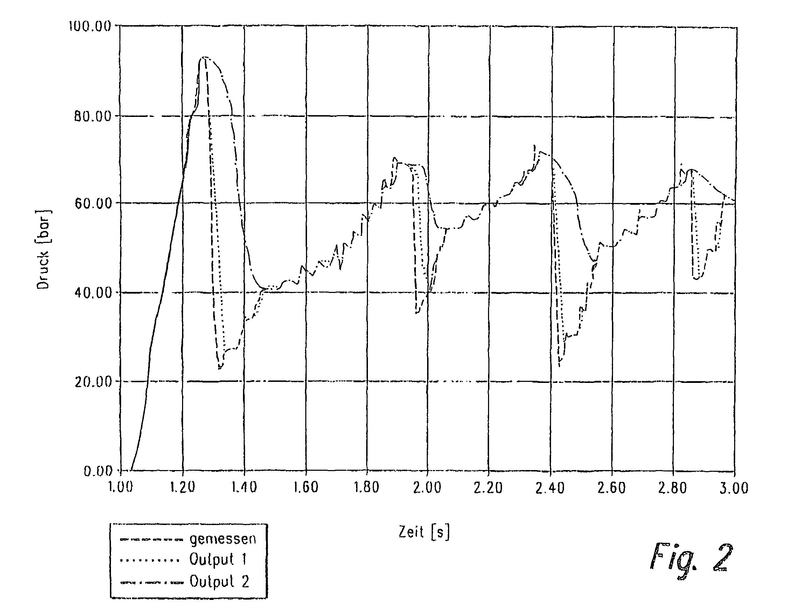

Der gemessene Druck sowie der Zwischenwert und der gefilterte Druck sind in FIG.2 dargestellt.

Danach wird aus den gefilterten Bremsdrücken $P_{vlf}$ und $P_{vrf}$ in einem Subtrahierer 3 die Differenz der Ausgangsgrößen der Filter 2 bzw. 2' gebildes, welche nach Überschreiten einer toten Zone 4 die Eingangsgröße $f(\Delta p)$ für Steuerungsverstärker 5 und 6 liefert, deren Ausgangssignale im Addierer 7 zum Lenkwinkel δ summiert werden.

Die Steuerung besteht im wesentlichen aus einem konstanten Anteil

$$\delta_p = f(\Delta p) \cdot k_p \text{ (Block 5)}.$$

Durch die Filterung, die Totzone und die Dynamik des Lenkstellers baut sich zunächst eine Gierbewegung auf, welche auch bei idealer Auslegung der Verstärkung $k_p$ erhalten bleibt. Deshalb wird bei Beginn des Steuereingriffs noch ein zeitvariable Anteil

$$\delta_v = f(\Delta p) \cdot k_v \text{ (Block 6)}$$

berechnet.

Der Faktor $k_v$ wird auf einen bestimmten Wert gesetzt, wenn die Differenz der gefilterten Drücke die Totzone überschreitet und klingt dann kontinuierlich ab.

Beim Zuschalten der Steuerung wird also der Hinterradlenkwinkel sichtbar überhöht, so daß die Giergeschwindigkeit ihr Vorzeichen wechselt und der Gierwinkel so wieder reduziert wird. Der Fahrer muß in diesem Fall praktisch nicht mehr eingreifen. Über den gesamten Bremsvorgang gesehen nimmt die Giergeschwindigkeit nur sehr kleine Werte an, die Unstetigkeiten durch die ABS-Regelzyklen werden also weitgehend kompensiert.

Sowohl bei kleinen als auch bei hohen Geschwindigkeiten verhindert die Giermomentenkompensation ein Ausbrechen des Fahrzeugs. Mit zunehmender Geschwindigkeit wird die Unterstützung durch sie deutlicher.

Bei Versuchen mit festgehaltenem Lenkrad bleibt der Spurversatz recht klein, ein Gierwinkel baut sich sehr langsam auf.

Wie schon oben gesagt kann die bisher eingesetzte Messung der vorderen Radbremsdrücke auch durch einen Schätzalgorithmus ersetzt werden. Einer ist in der Patentanmeldung P 4030724.7 beschrieben, die der EP 487 967 B1 als Anlage beigefügt ist. Die Filterung der Bremsdrücke kann dabei so vereinfacht werden, daß die Blöcke 1, 1' entfallen.

Eine Beeinflussung des Vorderradlenkwinkels ist nach dem gleichen Prinzip möglich. Lediglich quantitative Unterschiede treten auf.

Die Einführung der zeitvariablen Verstärkung bringt bei unterschiedlichem Reibbeiwert auf verschiedenen Fahrzeugseiten wesentliche Vorteile, führt jedoch bei Vollbremsungen in der Kurve zu einem übersteuernden Verhalten des Fahrzeugs. Um diesen Nachteil zu vermeiden wird die Querbeschleunigung des Fahrzeugs mit herangezogen. Die Berücksichtigung der Querbeschleunigung, wie sie nun beschrieben wird, setzt jedoch nicht die Gewinnung des Lenkwinkels gemäß dem obersten Zweig der FIG.1 voraus.

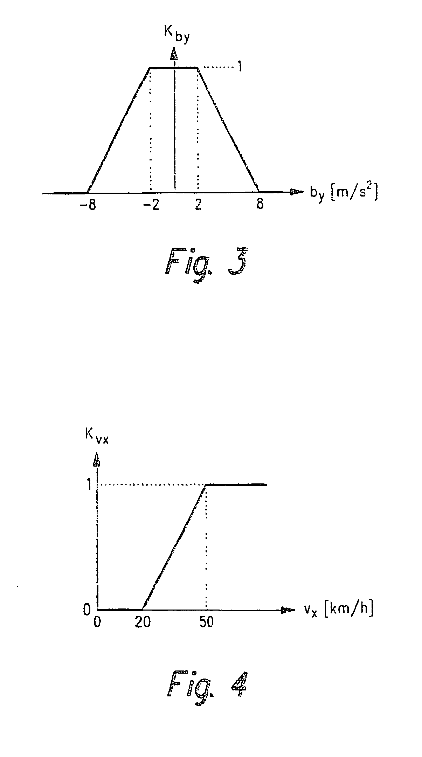

Aus der gemessenen Querbeschleunigung $b_y$ wird zunächst über die in FIG.3 dargestellte Kennlinie (Block 8) ein Korrekturfaktor $K_{by}$ bestimmt, der multiplikativ mit dem Hinterradlenkwinkel verknüpft wird (in 12).

Diese Kennlinie bewirkt, daß bei geringen Querbeschleunigungen, z.B. kleiner als 2 m/s$^2$ die Kompensation unbeeinflußt bleibt ($K_{by} = 1$), darüber eine querbeschleunigungsproportionale Abschwächung erfolgt, und bei sehr großen Querbeschleunigung, z.B. oberhalb von 8 m/s$^2$ die Kompensation vollständig unterdrückt wird ($K_{by} = 0$). Dieser Kennlinie liegt die Kenntnis zugrunde, daß bei μ -Split-Bremsungen die auftretenden Querbeschleunigungen sich ungefähr in dem Bereich +/-2 m/s$^2$ bewegen.

Diese Kennlinie allein ist nicht ausreichend. Schwankungen der Querbeschleunigung bei Werten $b_y > 2$ m/s$^2$ (z.B. Vorzeichenwechsel von $b_y$ beim gebremsten Spurwechsel) führen zu proportionalen Schwankungen des Korrekturfaktors und somit des Hinterradlenkwinkels, die als Unruhe spürbar sind. Nachteilig kommt dazu, daß diese Lenkwinkelschwankungen sich wiederum auf das $b_y$ -Signal auswirken. Eine geeignete Filterung des Korrekturfaktors ist daher notwendig. Sie muß aber gewährleisten, daß beim Aufbau einer Querbeschleunigung eine Abschwächung der GMK schnell erfolgt, jedoch bei bestimmten Fahrmanövern, z.B. Spurwechsel, nicht zu schnell wieder eingegriffen wird. Dies erreicht man mit zwei alternativen Tiefpässen 10 und 11 mit stark unterschiedlicher Zeitkonstante. Die querbeschleunigungsabhängige Lenkwinkelkorrektur hat damit die in FIG. 1 in den Blöcken 8, 9, 10 und 11 dargestellte Form.

Typische Werte für die Zeitkonstanten der beiden alternativen Tiefpasse sind 10 ms bzw. 1000 ms.

Die Blöcke 9, 10 und 11 sollen folgenden Sachverhalt symbolisieren. Steigt die Querbeschleunigung und wird Kb., kleiner so wird der Tiefpaß 10 mit der kleinen Zeitkonstante wirksam, d.h. der Ausgangswert $Kb_y$ folgt dem Eingang aus Block 8 schnell und verkleinert den Lenkwinkel. Nimmt dagegen die Querbeschleunigung ab und damit $Kb_y$ zu, so folgt $Kb_y$ dem Eingangswert aus Block 8 nur verzögert.

Mit diesen Maßnahmen wird eine Abschwächung der Giermomentenkompensation bei Kurvenbremsungen und gebremsten Spurwechseln auf hohen Reibwerten erreicht. Die verbleibenden Anteile des Hinterradlenkwinkels $\delta_{GMK}$ aus der Kompensation wirken sich nicht mehr nachteilig auf das Fahrverhalten aus.

Man kann die gemessene Querbeschleunigung durch eine aus den Lenkwinkeln und der Fahrzeuggeschwindigkeit (z.B. Tachosignal) nachgebildeten Größe ersetzen. Aus dem bekannten linearen Einspurmodell kann bei stationärer Betrachtung folgender Zusammenhang für die Querbeschleunigung hergeleitet werden:

$$b_{y,stat} = \frac{V_x^2 (\delta_v - \delta_h)}{l_0} \cdot \frac{1}{1 + (V_x / V_{ch})^2}$$

mit:

$V_x$ - Fahrzeuglängsgeschwindigkeit
$\delta_v$ - Vorderradlenkwinkel
$\delta_h$ - Hinterradlenkwinkel
$l_o$ - Radstand
$V_{ch}$ - charakterische Geschwindigkeit
$b_{y,stat}$ - geschätzte stationäre Beschleunigung

Dabei setzt sich $V_{ch}$ aus den Modellparametern wie folgt zusammen:

$$V_{ch} = \sqrt{\frac{1}{\frac{m}{l_0^2}\left(\frac{l_h}{C_v} - \frac{l_v}{C_h}\right)}}$$

mit

$m$ - Fahrzeugmasse
$l_v$ - Abstand Schwerpunkt - Vorderachse
$l_h$ - Abstand Schwerpunkt - Hinterachse
$C_v$ - Schräglaufsteifigkeit Vorderachse
$C_h$ - Schräglaufsteifikgeit Hinterachse

Mit den Parametern eines bestimmten Modells ergibt sich hieraus ein Wert für $V_{ch}$ von ca. 20 m/s.

Bei einem instationärem Fahrmanöver (gebremster Spurwechsel) zeigt sich, daß die auf Kreisfahrt abgestimmte stationäre Gleichung (1) zu hohe Querbeschleunigungen liefert. Aus diesem Grund wird ein dynamisches Glied (Tiefpaß mit Zeitkonstante $T_{bys}$) nachgeschaltet (Block 13), welches die Fahrzeugdynamik berücksichtigt.

Bei der Realisierung von Gleichung (1) im Rechner bietet es sich an, den Anteil

$$\frac{V_x^2}{l_0} \frac{1}{1+(V_x / V_{ch})^2}$$

als geschwindigkeitsabhängige Kennlinie abzulegen (Block 14). Gleichung (1) reduziert sich damit auf die Interpolation einer Kennlinie (in Block 14) sowie die Multiplikation des Ergebnisses mit der Differenz $(\delta_v - \delta_n)$ (in Block 15). Die gesamte Querbeschleunigungskorrektur hat damit die im mittlerem Zweig in FIG. 1 dargestellte Form.

In der Schätzung der Querbeschleunigung ist, wie oben dargastellt, der Hinterradlenkwinkel $\delta_h$ als Eingangsgröße enthalten. Gleichzeitig wirkt die Schätzung auf einen Teil des Hinterradlenkwinkels, nämlich den GMK-Anteil, zurück. Damit hierbei keine Rückkopplungseffekte auftreten können, wird als Eingangsgröße der Querbeschleunigungsschätzung lediglich der aus sonstiger Hinterradlenk-Steuerung stammende Anteil des Hinterradlenkwinkels berücksichtigt.

Zur Unterdrückung des verstärkten Eindrehens am Ende einer Kurvenbremsung durch die Giermornentenkomoensation wird ein von der Fahrzeuggeschwindigkeit abhängiger Verstärkungsfaktor $K_{V_x}$ multiplikativ überlagert.

Dessen beispelhafter Verkauf ist im Block 16 abgespeichert und in FIG.4 dargestellt. Oberhalb z. B. von 50 km/h bleibt der Verstärkungsfaktor unverändert auf Eins und im Bereich von z. B. 50 km/h bis 20 km/h wird er kontinuierlich auf Null abgebaut. Diese Maßnahme ist für $\mu$-Split-Bremsungen von untergeordneter Bedeutung, da Fahrzeuge mit ABS im unteren Geschwindigkeitsbereich keine Beherrschbarkeitsprobleme zeigen.

Dieser zusätzliche Faktor $K_{V_z}$ wird im Multiplizierer 12 multiplikativ berücksichtigt. Der Lenkwinkel für die Giermomentenkompensation lautet somit insgesamt:

$$\delta_{GMK} = K_{by} \cdot K_{VZ} \cdot \delta.$$

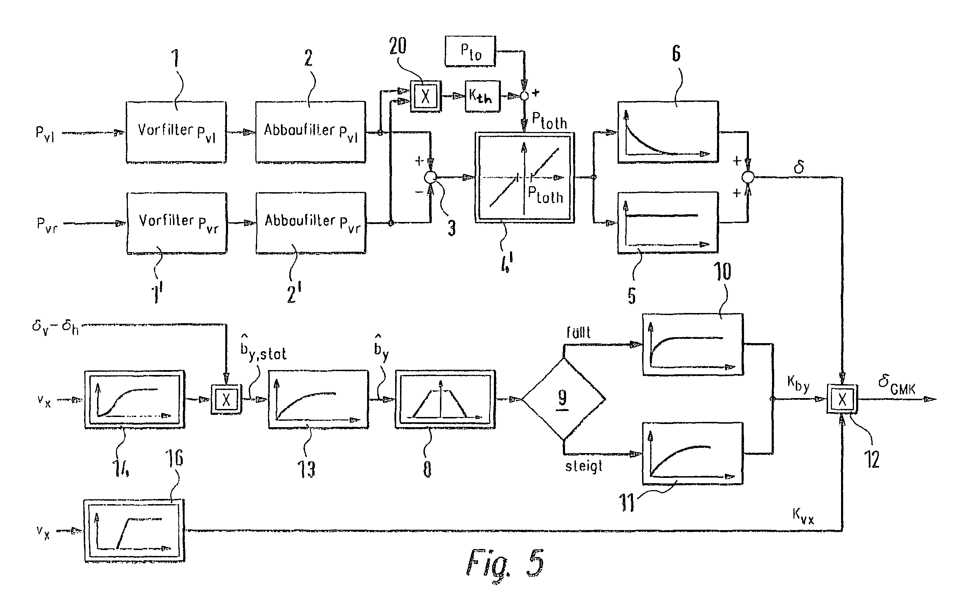

Das Blockschaltbild eines modifizierten technischen Umfeldes aus FIG.5 unterscheidet sich von dem aus FIG. 1 durch eine variable Totzone 4'. Dabei werden die gefilterten Bremsdrücke $P_{vlf}$, $P_{vrf}$ mittels eines Multiplizierers 20 miteinander multipliziert. Das Produkt aus $P_{vlf}$ und $P_{vrf}$ wird mit einem Korrekturfaktor $K_{tb}$ multipliziert und mit einem vorgegebenen Grenzwert $P_{to}$ zu einem korrigierten Grenzwert $P_{toth}$ addiert.

In dem anhand von FIG.1 bis FIG.5 beschriebenen Beispiel für ein technisches Umfeld, welches durch ein Ausführungsbeispiel der vorliegenden Erfindung verbessert wird, wird von einem Fahrzeug mit einem Antiblockiersystem (ABS) ausgegangen, bei welchem die Bremsdrücke der Hinterräder nicht individuell geregelt werden. Dies ist für die Zwecke eines bloßen Antiblockiersystems (ABS)häufig ausreichend, so daß eine individuelle Regelung der Bremsdrücke der Hinterräder bei kommerziell erhältlichen Antiblockiersystemen (ABS) regelmäßig nicht vorgesehen ist. Infolgedessen treten Bremsdruckdifferenzen nur an den Rädern der Vorderachse auf und müssen auch nur dort berücksichtigt werden.

Anderes gilt für Fahrzeuge, welche mit einer Fahrdynamikregelung (FDR bzw. ESP) ausgerüstet sind. Hier werden im Rahmen der Fahrdynamikregelung zumindest zeitweise Bremsdrücke der Räder beider Achsen individuell geregelt. Dabei werden gezielt unterschiedliche Bremsdrücke jeweils an den Rädern einer Achse eingestellt, um die Fahrzeugbewegung zu beeinflussen.

Diese Umstände werden in dem in FIG.6 dargestellten Ausführungsbeispiel der Erfindung berücksichtigt. Dabei wird von der Variante aus FIG.5 mit einer variablen Totzone 4' ausgegangen. Selbstverständlich ist die Erfindung auch für die Variante aus FIG.1 mit einer festen Totzone einsetzbar. Auf diese Weise wird erreicht, daß die Giermomentkompensation (GMK) nur auf Bremsdruckdifferenzen auf einer Antiblockierregelung (ABS) und nicht auch bedingt durch einen Fahrzeugregler einer Fahrdynamikregelung (FDR bzw. ESP) reagiert.

Gegenüber der Variante aus FIG.5 ist die Giermomentkompensation (GMK) in FIG.6 um zwei Teile erweitert:

Die erste Erweiterung, die im oberen linken Teil von FIG.6 dargestellt ist, dient der Berucksichtigung von Bremsdruckdifferenzen der Räder der Hinterachse. Zu diesem Zweck wurde ein weiterer Zweig in das Blockdiagramm eingefügt, welcher im wesentlichen dem oberen Zweig aus FIG.5 (bzw. FIG.1) entspricht. Gleiche Komponenten werden in der Darstellung daher auch mit gleichen Bezugszeichen bezeichnet, welche lediglich um den Zusatz "h" für Hinterachse bzw. "v" für Vorderachse ergänzt werden.

Die Bremsdrücke der Hinterräder $P_{hl}$ bzw. $P_{hr}$ können, wie oben für die Bremsdrücke der Vorderräder $P_{vl}$, $P_{vr}$ beschrieben, gemessen oder geschätzt werden. Sie werden dann auch im wesentlichen auf die gleiche Weise wie die Bremsdrücke der Vorderräder $P_{vl}$, $P_{vr}$ behandelt. Sie werden also in Vor- und Abbaufiltern $1_h, 1_h', 2_h, 2_h'$ gefiltert. Die Differenz der gefilterten Bremsdrücke $P_{hlf}$, $P_{hrf}$ wird in einem Subtrahierer $3_h$ bestimmt. Übersteigt die Differenz der gefilterten Drücke $P_{hlf}$, $P_{hrf}$ eine vom Gesamtdruckniveau abhängige oder eine festvorgegebene Totzone 4, wird ein Teil-Kompensations-Lenkwinkel $\delta_{GMKh}$ bestimmt. Ein von den Bremsdrücken der Räder der Vorderachse wie oben beschrieben bestimmter Lenkwinkel wird als weiterer Teil-Kompensations-Lenkwinkel $\delta_{GMKv}$ zusammen mit dem Teil-Kompensations-Lenkwinkel $\delta_{GMKh}$ von den Bremsdrücken der Räder der Hinterachse zu einem Hinter- und/oder Vorderachslenkwinkel $\delta_{ideal}$ addiert.

Die Behandlung der Bremsdrücke $P_{hl}$, $P_{hr}$ der Hinterräder unterscheidet sich von der Behandlung der Bremsdrücke $P_{vl}$, $P_{vr}$ der Vorderräder hauptsächlich durch die folgenden Punkte: Es können andere Parameter für die Filter und die Totzone gewählt werden; ebenso ein anderer Wert für die konstante Verstärkung. Solche unterschiedlichen Parameter können z. B. der unterschiedlichen Bauform oder der unterschiedlichen Baugröße der Bremsen, d. h. einem unterschiedlichen Zusammenhang zwischen Bremsdruck und Bremskraft an der Vorder- bzw. Hinterachse, Rechnung tragen. Weiterhin können derart unterschiedliche Parameter einer möglichen unterschiedlichen Spurbreite von Vorder- und Hinterachse oder unterschiedlichen ABS-Strategien Rechnung tragen.

Außerdem kann die zeitvariable Verstärkung der Bremsdruckdifferenz (Block 6 in FIG. 1 und FIG. 5) wegfallen. Dies ist möglich, da im Falle eines ABS-Eingriffs innerhalb einer in eine Fahrdynamikregelung (FDR) regelmäßig die Bremsdruckdifferenz der Hinterräder so gesteuert wird, daß sie nur langsam ansteigt. Andererseits kann auch eine zeitvariable Verstärkung der Bremsdruckdifferenz der Hinterräder sinnvoll sein und dementsprechend verwendet werden.

Aufgrund der genannten Unterschiede bei der Behandlung der hinteren und der vorderen Bremsdrücke $P_{hl}$, $P_{hr}$ bzw. $P_{vl}$, $P_{vr}$ ist es zweckmäßig, die Differenzen zunächst jeweils, wie in FIG.6 dargestellt, getrennt zu bilden. Anschließend werden die Teil-Kompensations-Lenkwinkel $\delta_{GMKv}$, $\delta_{GMKv}$ zum gesamten Hinter- oder Vorderachslenkwinkeleingriff $\delta_{ideal}$ addiert.

Der so erhaltene Hinter- oder Vorderachslenkwinkeleingriff $\delta_{ideal}$ kann an sich dem Lenkwinkel für die Giermomentkompensation entsprechen. Wie oben beschrieben, werden aber zweckmäßigerweise zusätzlich die Querbeschleunigung $b_y$ und die Geschwindigkeit des Fahrzeugs berücksichtigt. Hierzu wird der Hinter- oder Vorderachslenkwinkel $\delta_{ideal}$ mit den genannten Korrekturfaktoren $K_{by}$ und $K_{vx}$ beaufschlagt. Der so erhaltene aktuelle Kompensationslenkwinkel $\delta_A$ wird zur Giermomentkompensation an der Hinterachse eingestellt oder einem Lenkwinkel der Vorder- oder der Hinterachse überlagert.

Die zweite Erweiterung dient dem Zweck, sicherzustellen, daß die Giermomentkompensation (GMK) nur auf Bremsdruckdifferenzen aus einer Antiblockierregelung (ABS) und nicht bedingt durch einen Fahrdynamikregler reagiert. Hiefür wird ein Signal berei t-gestellt, welches anzeigt, wann Eingriffe des Fahrzeugreglers erfolgen. Daß Eingriffe des Fahrzeugreglers vorliegen, wird in Fahrdynamikregelungen regelmäßig in der Form eines Flags angezeigt, welches beispielsweise die Werte Null und Eins annehmen kann. Es muß daher nur an die Steuerung der Giermomentkompensation (GMK) übertragen werden. Zur Verarbeitung des Signals F ist ein Selektor 50 vorgesehen.

Vorzugsweise wird durch diese Erweiterung die Giermomentkompensation (GMK) abgeschaltet, wenn Eingriffe des Fahrzeugreglers erfolgen. Ein bereits anliegender Kompensations-Lenkwinkel $\delta_A$ wird während eines nachfolgenden Eingriffs des Fahrzeugreglers konstant gehalten und danach auf einen aktuellen Kompensations-Lenkwinkel $\delta_A$ im wesentlichen kontinuierlich überführt.

Zu diesem Zweck wird zunächst mittels eines Blocks 52 aus dem Flag F des Fahrzeugreglers von einem Ausschaltfilter 30 ein Faktor $K_H$ gebildet. Der Wert des Faktors $K_H$ ist immer gleich eins, wenn der Flag F gesetzt, d.h. gleich eins ist. Verschwindet der Flag F, geht der Wert des Faktors $K_H$ mit einem vorgegebenen Zeitverhalten gegen Null. Ein solcher Zusammenhang ist beispielhaft in FIG.7 dargestellt. In diesem Beispiel geht der Wert des Faktors $K_H$ linear in einer Zeit $\Delta t$ gegen Null. Alternativ kann beispielsweise ein exponentieller Übergang verwendet werden.

Mit Hilfe des so erhaltenen Faktors $K_H$ wird der letztlich an die gelenkte Achse zur Giermomentkompensation anzulegende bzw. oder Vorderachslenkwinkel $\delta_{GMK}$ mittels eines Blocks 53 entsprechend der folgenden Gleichung ermittelt:

$$\delta_{GMK} = (1 - K_H) \cdot \delta_A + K_H \cdot \delta_H$$

mit

$\delta_A =$ der jeweils aktuelle Kompensations-Lenkwinkel

$\delta_H =$ ein während eines Eingriffs des Fahrzeugreglers konstant gehaltener Kompensations-Lenkwinkel.

Um dabei den konstanten Kompensations-Lenkwinkel $\delta_H$ zu erhalten, wird ein steuerbares Sample-and-Hold-Glied 51 verwendet. Dieses ist so geschaltet, daß es den jeweils aktuellen Kompensations-Lenkwinkel $\delta_A$ übernimmt (Sample). Solange der Faktor $K_H$ gleich Null ist, gibt das Sample-and-Hold-Glied 51 diesen aktuellen Kompensationslenkwinkel $\delta_A$ auch jeweils als Ausgabewert aus (d.h. $\delta_A = \delta_H$). Sobald jedoch der Faktor $K_H$ größer als Null ist, wird der zuletzt anliegende Wert des Kompensationslenkwinkels $\delta_A$ eingefroren (Hold) und somit der konstante Kompensations-

Lenkwinkel $\delta_H$ erzeugt und ausgegeben. Sobald der Faktor $K_H$ wieder den Wert Null annimmt, wird das Halten des konstanten Kompensations-Lenkwinkels $\delta_H$ wieder eingestellt u.s.w.

Solange nun der Faktor $K_H$ gleich Null ist, d.h. solange keine Eingriffe des Fahrzeugregler erfolgen, vereinfacht sich die obige Gleichung zu:

$$\delta_{GMK} = (1 - 0) \cdot \delta_A + 0 \cdot \delta_H = \delta_A$$

Jeweils erforderliche Giermomentkompensationen werden also entsprechend der obigen Beschreibung unverändert durchgeführt.

Sobald ein Eingriff des Fahrzeugreglers erfolgt, wird der Faktor $K_H$ gleich eins. Damit wird aus der obigen Gleichung:

$$\delta_{GMK} = (1 - 1) \cdot \delta_A + 1 \cdot \delta_H = \delta_H$$

d.h., der zuletzt vor dem Eingriff des Fahrzeugreglers angelegte Kompensationswinkel $\delta_A$ wird als konstanter Kompensationswinkel $\delta_H$ gehalten und weiter während des Eingriffs angelegt.

Sobald schließlich der Eingriff des Fahrzeugreglers abgeschlossen ist, wird der Faktor $K_H$ kontinuierlich während einer Zeit $\Delta t$ wieder auf den Wert Null überführt. Während dieser Zeit wird der konstante Kompensationswinkel $\delta_H$ weiter gehalten und der resultierende Kompensationswinkel $\delta_{GMK}$ wie oben dargelegt zu:

$$\delta_{GMK} = (1 - K_H) \cdot \delta_A + K_H \cdot \delta_H$$

berechnet. Auf diese Weise wird der während des Eingriffs des Fahrzeugreglers konstant gehaltene Kompensationswinkel $\delta_H$, welcher während dieser Zeit auch als resultierender Kompensationswinkel $\delta_{GMK}$ anlag, kontinuierlich auf den Wert des jeweils nach dem Eingriff der Fahrdynamikregelung (FDR bzw. ESP) zur Kompensation des Giermomentes eigentlich benötigten aktuellen Kompensationswinkel $\delta_A$ überführt.

Eine andere Möglichkeit, zu vermeiden, daß die Giermomentkompensation (GMK) dessen Fahrzeugregler entgegenwirkt, besteht darin, den aktuellen Eingriffswinkel $\delta_A$ der Giermomentkompensation (GMK) stark zu filtern, solange die Eingriffe des Fahrzeugreglers erfolgen. Damit werden die Fahrdynamikeingriffe im höheren Frequenzbereich durch die Giermomentkompensation (GMK) nicht beeinträchtigt.

Das beschriebene Ausführungsbeispiel hat gegenüber dem beispielhaft geschilderten technischen Umfeld insbesondere den Vorteil, daß die von dem in die Fahrdynamikregelung (FDR bzw. ESP) integrierten Antiblockiersystem (ABS) nach dem Stand der Technik zu berücksichtigende Giermomentabschwächungen (GMA) sowohl an der Vorderachse als auch an der Hinterachse stark reduziert werden können. Auch kann an der Hinterachse bereits bei höherer Geschwindigkeit auf ABS-Individualeingriffe übergegangen werden. Dadurch wird der Bremsweg verkürzt. Ferner können die Giermomentenkompensationseingriffe mit anderen Lenkeingriffen überlagert werden. Als Eingangsinformationen der Giermomentkompensation können gemessene oder geschätzte Bremsdrücke verwendet werden, welche vorzugsweise bereits aus der Fahrdynamikregelung (FDR bzw. ESP) zur Verfügung stehen.

Die oben beschriebenen Ausführungsbeispiele dienen nur der besseren Verständlichkeit der Erfindung. Sie sind nicht als Einschränkung gedacht. Es versteht sich daher, daß auch alle weiteren möglichen Ausführungsformen im Rahmen der Erfindung gemäß den Ansprüchen liegen. Insbesondere versteht es sich, daß die Erfindung auch eine Vorrichtung zur Umsetzung des beschriebenen Verfahrens und ein mit einer solchen Vorrichtung ausgestattetes Fahrzeug umfaßt.

Bezugszeichenliste

| | |
|---|---|
| $\delta$, $\delta_{ideal}$ | Hinter- und/oder Vorderachslenkwinkel |
| $\Delta_A$ | Kompensationslenkwinkel |
| $\delta_{GNKv}$, $\delta_{GMKv}$ | Teil-Kompensations-Lenkwinkel |
| $\Delta P$ | Druckdifferenz |

| $k_p$ | Proportionalitätsfaktor |
|---|---|
| $k_v$ | Faktor |
| $P_{vl}, P_{vr}$ | Bremsdrücke der Vorderräder |
| $P_{vlf}, P_{vrf}$ | gefilterten Bremsdrücke der Vorderräder |
| $P_{hl}, P_{hr}$ | Bremsdrücke der Hinterräder |
| $P_{hlf}, P_{hrf}$ | gefilterten Bremsdrücke der Hinterräder |
| $b_y$ | Querbeschleunigung |
| $K_{by}$ | Korrekturfaktor |
| $K_{by}$ | Verstärkungsfaktor |
| $P_{tot}$ | vergebener Grenzwert |
| $K_{th}$ | Korrekturfaktor |
| $P_{toth}$ | korrigierter Grenzwert |
| F | Flag |
| $K_H$ | Gewichtsfaktor |
| S/H | Sample-and-Hold-Glied |

| 1,1' | Vorfilter |
|---|---|
| 2,2' | Abbaufilter |
| 3 | Subtrahierer |
| 4 | Totzone bzw. Totzone |
| 4' | variable Totzone bzw. Totzone |
| 5, 6 | Steuerungsverstärker bzw. Block |
| 7 | Addierer |
| 8 | Kennlinie bzw. Block |
| 9 | |
| 10,11 | alternative Tiefpässe |
| 12 | Multiplizierer |
| 13 | dynamisches Glied |
| 14 | geschwindigkeitsabhängige Kennlinie |

| 20 | Multiplizierer |
|---|---|

| 30 | Außchaltfilter |
|---|---|

## Patentansprüche

**1.** Verfahren zum Betrieb eines Fahrzeugs mit einem Fahrzeugregler zur individuellen Einstellung von Bremskräften der Räder zumindest einer Achse des Fahrzeugs und einem Giermomentenkompensator zur zumindest teilweisen Kompensation eines Giermomentes des Fahrzeuges infolge unterschiedlicher Bremskräfte einzelner Räder der zumindest einen Achse durch einen Eingriff in eine Lenkung des Fahrzeugs, wobei der Eingriff des Giermomentenkompensators in die Lenkung nicht oder nur verringert erfolgt, während mittels des Fahrzeugreglers Bremskräfte einstellt werden, **dadurch gekennzeichnet, daß** der Eingriff in die Lenkung des Fahrzeugs mittels eines in Abhängigkeit von Bremskräften einzelner Räder ermittelten Kompensations-Lenkwinkels erfolgt, wobei für die Vorderräder und für die Hinterräder jeweils getrennte Teil-Kompensations-Lenkwinkel ($\delta_{GMKV}$ bzw. $\delta_{GMKh}$) bestimmt werden und der Kompensations-Lenkwinkel ($\delta, \delta_{ideal}, \delta_{GMK}, \delta_A, \delta_H$) in Abhängigkeit von den Teil-Kompensations-Lenkwinkeln ($\delta_{GMKV}$ bzw. $\delta_{GMKh}$) bestimmt wird.

**2.** Verfahren nach Anspruch 1,
**dadurch gekennzeichnet,**
**daß** die Achse die Vorder- und/oder die Hinterachse ist.

**3.** Verfahren nach Anspruch 1 oder 2,
**dadurch gekennzeichnet,**
**daß** zur mindestens teilweisen Kompensation des Giermomentes des Fahrzeuges ein von einer Differenz ($\Delta P$) von getrennt eingeregelten Bremsdrücken ($P_{vl}, P_{vr}, P_{hl}, P_{hr}$) der Vorder- und/oder der Hinterräder abhängiger Kompensations-Lenkwinkel ($\delta, \delta_{ideal}, \delta_{GMK}, \delta_A, \delta_H$) an einem Hinterradlenksystem eingestellt oder einem Vorderrad- oder Hinterradlenkwinkel überlagert wird.

4. Verfahren nach Anspruch 3,
**dadurch gekennzeichnet,**
**daß** der Wert des Kompensations-Lenkwinkels ($\delta$,$\delta_{ideal}$,$\delta_{GMK}$,$\delta_A$,$\delta_H$) in einem vorgegebenen oder veränderlichen Bereich kleiner Bremsdruckdifferenzen ($\Delta P$), d.h. innerhalb einer Totzone, gleich Null und außerhalb der Totzone auf einen Wert ungleich Null gesetzt wird.

5. Verfahren nach Anspruch 1,
**dadurch gekennzeichnet,**
**daß** der Kompensations-Lenkwinkel ($\delta$,$\delta_{ideal}$,$\delta_{GMK}$,$\delta_A$,$\delta_H$) durch Addition der Teil-Kompensations-Lenkwinkel ($\delta_{GMKV}$ bzw. $\delta_{GMKh}$) bestimmt wird.

6. Verfahren nach Anspruch 4,
**dadurch gekennzeichnet,**
**daß** zumindest ein Teil-Kompensations-Lenkwinkel ($\delta_{GMKV}$ bzw. $\delta_{GMKh}$) nach dem Überschreiten der Totzone durch Addition des Produktes einer Konstanten und dem Ausgangswert der Totzone und des Produktes einer variablen Verstärkung und dem Ausgangswert der Totzone bestimmt wird.

7. Verfahren nach einem der Ansprüche 1 bis 6,
**dadurch gekennzeichnet,**
**daß** der Kompensations-Lenkwinkel ($\delta_A$) gespeichert wird, während mittels des Fahrzeugreglers Bremskräfte einstellt werden.

8. Verfahren nach Anspruch 7,
**dadurch gekennzeichnet,**
**daß** der gespeichert Kompensations-Lenkwinkel ($\delta_H$) nach Beendigung der Einstellung der Bremskräfte mittels des Fahrzeugreglers auf einen aktuellen Kompensations-Lenkwinkel ($\delta_A$, $\delta_A$') im wesentlichen kontinuierlich überführt wird.

9. Einrichtung zum Betrieb eines Fahrzeugs mit einem Fahrzeugregler zur individuellen Einstellung von Bremskräften der Räder zumindest einer Achse des Fahrzeugs und einem Giermomentenkompensator zur zumindest teilweisen Kompensation eines Giermomentes des Fahrzeuges infolge unterschiedlicher Bremskräfte einzelner Räder der zumindest einen Achse durch einen Eingriff in eine Lenkung des Fahrzeugs, zum Betrieb eines Fahrzeugs gemäß einem Verfahren nach einem der vorhergehenden Ansprüche, wobei
die Einrichtung zum Betrieb eines Fahrzeugs einen Selektor (50) zur Verhinderung oder Verringerung des Eingriffs des Giermomentenkompensators in die Lenkung bei Einstellung von Bremskräften durch den Fahrzeugregler aufweist, **dadurch gekennzeichnet, daß**
der Eingriff in eine Lenkung des Fahrzeugs mittels eines in Abhängigkeit von Bremskräften einzelner Räder ermittelten Kompensations-Lenkwinkels erfolgt,
wobei für die Vorderräder und für die Hinterräder jeweils getrennte Teil-Kompensations-Lenkwinkel ($\delta_{GMKV}$ bzw. $\delta_{GMKh}$) bestimmt werden und der Kompensations-Lenkwinkel ($\delta$,$\delta_{ideal}$,$\delta_{GMK}$,$\delta_A$,$\delta_H$) in Abhängigkeit von den Teil-Kompensations-Lenkwinkeln ($\delta_{GMKV}$ bzw. $\delta_{GMKh}$) bestimmt wird.

**Claims**

1. Method for operating a vehicle having a vehicle regulator for individually setting braking forces of the wheels of at least one axle of the vehicle and a yaw moment compensator for at least partially compensating a yaw moment of the vehicle due to different braking forces of individual wheels of the at least one axle by means of an intervention into a steering of the vehicle, wherein the intervention of the yaw moment compensator into the steering does not take place or takes place only to a reduced degree, while braking forces are set by means of the vehicle regulator, **characterized in that** the intervention into the steering of the vehicle is carried out by means of a compensation steering angle which is acquired as a function of braking forces of individual wheels, wherein respective separate partial compensation steering angles ($\delta_{GMKV}$ and $\delta_{GMKh}$) are determined for the front wheels and for the rear wheels, and the compensation steering angle ($\delta$, $\delta_{ideal}$, $\delta_{GMK}$, $\delta_A$, $\delta_H$) is determined as a function of the partial compensation steering angles ($\delta_{GMKV}$ and $\delta_{GMKh}$).

**2.** Method according to Claim 1, **characterized in that** the axle is the front axle and/or the rear axle.

**3.** Method according to Claim 1 or 2, **characterized in that**, in order to at least partially compensate the yaw moment of the vehicle, a compensation steering angle ($\delta$, $\delta_{ideal}$, $\delta_{GMK}$, $\delta_A$, $\delta_H$) which is dependent on a difference ($\Delta P$) between separately applied braking pressures ($P_{v1}$, $P_{vr}$, $P_{hl}$, $P_{hr}$) of the front wheels and/or of the rear wheels is set at a rear wheel steering system or superimposed on a front wheel steering angle or rear wheel steering angle.

**4.** Method according to Claim 3, **characterized in that** the value of the compensation steering angle ($\delta$, $\delta_{ideal}$, $\delta_{GMK}$, $\delta_A$, $\delta_H$) is set in a predefined or variable region of small braking pressure differences ($\Delta P$), i.e. equal to 0 within a dead zone and to a value unequal to 0 outside the dead zone.

**5.** Method according to Claim 1, **characterized in that** the compensation steering angle ($\delta$, $\delta_{ideal}$, $\delta_{GMK}$, $\delta_A$, $\delta_H$) is determined by adding the partial compensation steering angles ($\delta_{GMKV}$ and $\delta_{GMKh}$).

**6.** Method according to Claim 4, **characterized in that** at least a partial compensation steering angle ($\delta_{GMKV}$ and $\delta_{GMKh}$) is determined after the dead zone has been exceeded by adding the product of a constant and the output value of the dead zone and the product of a variable amplification and the output value of the dead zone.

**7.** Method according to one of Claims 1 to 6, **characterized in that** the compensation steering angle ($\delta_A$) is stored while braking forces are set by means of the vehicle regulator.

**8.** Method according to Claim 7, **characterized in that** the stored compensation steering angle ($\delta_H$) is essentially continuously converted to a current compensation steering angle ($\delta_A$, $\delta_A$') after the ending of the setting of the braking forces by means of the vehicle regulator.

**9.** Device for operating a vehicle having a vehicle regulator for individually setting braking forces of the wheels of at least one axle of the vehicle and a yaw moment compensator for at least partially compensating a yaw moment of the vehicle due to different braking forces of individual wheels of the at least one axle by means of an intervention into a steering of the vehicle, for operating a vehicle in accordance with a method according to one of the preceding claims, wherein the device for operating a vehicle has a selector (50) for preventing or reducing the intervention by the yaw moment compensator in the steering when braking forces are set by the vehicle regulator, **characterized in that** the intervention into a steering of the vehicle is carried out by means of a compensation steering angle which is acquired as a function of braking forces of individual wheels, wherein respective separate partial compensation steering angles ($\delta_{GMKV}$ and $\delta_{GMKh}$) are determined for the front wheels and for the rear wheels, and the compensation steering angle ($\delta$, $\delta_{ideal}$, $\delta_{GMK}$, $\delta_A$, $\delta_H$) is determined as a function of the partial compensation steering angles ($\delta_{GMKV}$ and $\delta_{GMKh}$).

**Revendications**

**1.** Procédé de gestion d'un véhicule équipé d'un régulateur pour le réglage individuel des forces de freinage des roues d'au moins un essieu du véhicule ainsi que d'un compensateur de couple de lacet pour compenser au moins partiellement le couple de lacet du véhicule par suite des forces de freinage différentes des diverses roues d'au moins un essieu par une action sur la direction du véhicule, l'action du compensateur du couple de lacet sur la direction ne se faisant pas ou de façon diminuée pendant que le régulateur du véhicule règle les forces de freinage, **caractérisé en ce que** l'action sur la direction du véhicule se fait à l'aide d'un angle de compensation de direction fourni en fonction des forces de freinage des différentes roues, et pour les roues avant et les roues arrière on a des angles de compensation partielle de direction différents ($\delta_{GMKV}$ ou $\delta_{GMKh}$) et des angle de compensation de direction ($\delta$, $\delta_{ideal}$, $\delta_{GMK}$, $\delta_A$, $\delta_H$) définis selon les angles de compensation partielle de direction ($\delta_{GMKV}$ ou $\delta_{GMKh}$).

**2.** Procédé selon la revendication 1, **caractérisé en ce que** l'essieu est l'essieu avant et/ou l'essieu arrière.

**3.** Procédé selon la revendication 1 ou 2, **caractérisé en ce que**

pour compenser au moins partiellement le couple de lacet du véhicule, on combine un angle de compensation de direction ($\delta$, $\delta_{ideal}$, $\delta_{GMK}$, $\delta_A$, $\delta_H$) dépendant de la différence ($\Delta P$) entre les pressions de frein ($P_{v1}$, $P_{vr}$, $P_{hl}$, $P_{hr}$), des roues avant et/ou des roues arrière, réglées séparément pour le système des roues directrices arrière ou un angle de direction de roues avant ou arrière.

4. Procédé selon la revendication 3,
**caractérisé en ce que**
la valeur de l'angle de compensation de direction ($\delta$, $\delta_{ideal}$, $\delta_{GMK}$, $\delta_A$, $\delta_H$) est fixée égale à zéro dans une plage prédéfinie ou variable pour de petites différences de pression de frein ($\Delta P$) ; c'est-à-dire dans une zone morte et cet angle est fixé à une valeur différente de zéro en dehors de la zone morte.

5. Procédé selon la revendication 1,
**caractérisé en ce que**
l'angle de compensation de direction ($\delta$, $\delta_{ideal}$, $\delta_{GMK}$, $\delta_A$, $\delta_H$) est obtenu par l'addition des angles de compensation partielle de direction ($\delta_{GMKV}$ ou $\delta_{GMKh}$).

6. Procédé selon la revendication 4,
**caractérisé en ce qu'**
au moins un angle de compensation partielle de direction ($\delta_{GMKV}$ ou $\delta_{GMKh}$), après dépassement de la zone morte, est défini par l'addition du produit d'une constante et de la valeur de sortie de la zone morte et du produit d'une amplification variable et de la valeur de sortie de la zone morte.

7. Procédé selon l'une des revendications 1 à 6,
**caractérisé en ce qu'**
on enregistre l'angle de compensation de direction ($\delta_A$) pendant que l'on règle les forces de freinage à l'aide du régulateur du véhicule.

8. Procédé selon la revendication 7,
**caractérisé en ce qu'**
à la fin du réglage des forces de freinage à l'aide du régulateur du véhicule on fait passer l'angle de compensation de direction ($\delta_H$), enregistré, pratiquement en continu sur l'angle de compensation actuelle de direction ($\delta_A$, $\delta_A'$).

9. Installation de gestion d'un véhicule équipé d'un régulateur pour le réglage individuel des forces de freinage des roues d'au moins un essieu du véhicule et d'un compensateur de couple de lacet pour compenser au moins partiellement le couple de lacet du véhicule résultant de forces de freinage différentes des diverses roues d'au moins un essieu par une action sur la direction du véhicule pour le fonctionnement du véhicule selon un procédé de l'une des revendications précédentes selon lequel
l'installation de gestion du véhicule comporte un sélecteur (50) pour éviter ou diminuer l'action du compensateur de couple de lacet sur la direction lors du réglage des forces de freinage par le régulateur du véhicule,
**caractérisée en ce que**
l'action sur la direction du véhicule se fait à l'aide d'un angle de compensation de direction déterminé en fonction des forces de freinage des différentes roues,
et pour les roues avant et les roues arrière on définit des angles de compensation partielle de direction ($\delta_{GMKV}$ ou $\delta_{GMKh}$), différents chaque fois et
on définit les angles de compensation de direction ($\delta$, $\delta_{ideal}$, $\delta_{GMK}$, $\delta_A$, $\delta_H$) en fonction des angles de compensation partielle de direction ($\delta_{GMKV}$ ou $\delta_{GMKh}$).

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4031316 A1
- EP 487967 B1
- US 5482133 A

### In der Beschreibung aufgeführte Nicht-Patentliteratur

- **ZANTEN, R. ERHARDT ; G. PFAFF.** *ATZ Automobiltechnische Zeitschrift,* 1994, vol. 96 (11), 674-689